# EUROPEAN PATENT APPLICATION

(11) **EP 4 471 722 A1**
(43) Date of publication of application: **04.12.2024**
(21) Application number: 23176310.3
(22) Date of filing: 31.05.2023
(51) Int. Cl.: G06T 7/579

(54) **COMPUTING DEVICE AND METHOD FOR MAPPING**

(71) Applicant: Rovco Limited, Bristol Bristol BS1 6BX (GB)
(72) Inventor: CARRASCO, Pep Luis Negre, Bristol BS1 6BX (GB); LIBREROS, Eduardo Daniel Ruiz, Bristol BS1 6BX (GB)
(74) Representative: Latham, Stuart Alexander

(57) **Abstract**

A computing device (10) for generating a 3D model of an environment, the computing device comprising:
a data processor;
a range sensor;
a camera; and
a simultaneous location and mapping, SLAM, module configured to execute a SLAM 3D reconstruction algorithm to:
receive images from the camera;
process the images to develop a SLAM 3D model of the environment;
estimate pose data for the camera; and
identify key frames of the images from the camera,

wherein the range sensor has a known spatial relationship with respect of the camera, wherein the data processor is configured to:
receive range data from the range sensor;
receive pose data from the SLAM module that is associated in time with the range data;
determine a first set of range data comprising a first sequence of range

data received between a first key frame and a second key frame; and accumulate the first sequence of range data into a first range sub-model based on a first sequence of pose data received between the first key frame and the second key frame.

## Description

### Background

Conventional offshore surveying and mapping (e.g., bathymetry) is carried out using range sensors such as LIDARs or Multi Beam Echo Sounders (MBES), which allow to map subsea/seabed environments. The positional information required to build an MBES map is obtained via marine navigation systems, inertial navigations systems (INS), Global Navigation Satellite Systems (GNSS) or a combination of them. Often, MBES maps are optimised offline (post-survey) using various point cloud processing software tools. Offline optimisations can include drift or positional error corrections as well as fusion of MBES data with other sensor data.

The present inventors have devised a computing device and method for mapping which can exhibit one or more of the following advantages relative to known systems:
- improved accuracy
- improved robustness
- improved efficiency
- improved coverage
- faster mapping process
- reduced cost

### Summary

In accordance with a first aspect of the invention, there is provided a computing device for generating a 3D model of an environment, the computing device comprising:
a data processor;
a range sensor;
a camera; and
a simultaneous location and mapping, SLAM, module configured to execute a SLAM 3D reconstruction algorithm to:
   receive images from the camera;
   process the images to develop a SLAM 3D model of the environment;
   estimate pose data for the camera; and
   identify key frames of the images from the camera,
wherein the range sensor has a known spatial relationship with respect of the camera, wherein the data processor is configured to:
   receive range data from the range sensor;
   receive pose data from the SLAM module that is associated in time with the range data;
   determine a first set of range data comprising a first sequence of range data received between a first key frame and a second key frame; and
   accumulate the first sequence of range data into a first range sub-model based on a first sequence of pose data received between the first key frame and the second key frame.

Thus, the computing device according to the first aspect provides synchronisation of visual SLAM data and range data (such as MBES scans). This allows for building, in real-time, a single, common, combined and optimised 3D map comprised of measurements taken by both visual and acoustic sensors. Moreover, for resource constrained computer systems such as those used in harsh environments such as underwater, subsea, environment, etc. the system design of the computing device according to the first aspect allows efficient use of available processing power. Some or all of the components of the computing device can be contained within a casing defining a sealed interior space for isolating the components from the subsea or other harsh environment.

The computing device according to the first aspect provides a faster mapping process because multiple data sources are used allowing a larger area to be mapped without additional computation or manoeuvring of sensors.

The range sub-model can comprise a point cloud or a depth map or any other 3D representation of the scene captured or partially captured.

The computing device may comprise a platform such as a metal or plastics frame to which each component of the computing device is mounted.

Optionally, the first range sub-model is provided with an identifier linking it to the first key frame or the second key frame.

Optionally, the first sequence of pose data is determined by interpolating the pose data, wherein the first sequence of pose data has time stamps which match time stamps of the first sequence of range data.

Optionally, the data processor is configured to determine a first key frame synchronised range data by interpolating the range data received immediately before and after the first key frame such that the first key frame synchronised range data has a time stamp which matches the time stamp of the first key frame. Optionally, the data processor is configured to determine a second key frame synchronised range data by interpolating the range data received immediately before and after the second key frame such that the second key frame synchronised range data has a time stamp which matches the time stamp of the second key frame. Optionally, the first set of range data may further comprise the first key frame synchronised range data and/or the second key frame synchronised range data.

Optionally, the received images comprise a first image and a second image received after the first image; and the SLAM module is configured to: process the second image to determine whether a threshold has been reached relating to a degree of difference between the second image and the image; and determine that the second image is the first key frame if the threshold has been reached.

Thus, the SLAM module can compare received images. The threshold relating to a degree of difference can be the difference in perspectives of the object from the camera and each image which passes the threshold can be considered a "key frame". Every time a key frame is identified the camera view is typically a unique view on the model.

Optionally, the data processor is further configured to: determine a second set of range data comprising a second sequence of range data received between the second key frame and a third key frame; and accumulate the second sequence of range data into a second range sub-model based on the second sequence of pose data received between the second key frame and the third key frame.

Optionally, the data processor is further configured to execute a range sensor 3D reconstruction algorithm to generate a range sensor 3D model of the environment using the first range sub-model and the second range sub-model.

The range sensor 3D reconstruction algorithm may comprise a point cloud or a depth map or any other 3D representation of the scene captured or partially captured.

Developing the range sensor 3D model and/or the SLAM model may comprise developing a virtual environment. The virtual environment may comprise sizes/distances and/or orientation relative to each other, but without a sense of scale. The virtual environment may be mapped to a world environment, in which sizes/distances and/or orientation are relative/scaled to the real world using: the first image and/or a range data scan. That is, the first image and/or a range data, if it comprises an object of known scale, may be used to determine a scale of the range sensor 3D model and/or the SLAM model. This can be advantageous in a single camera system.

Optionally, the data processor is further configured to execute a 3D refinement algorithm configured to: receive correction data from the SLAM module indicating a development of the SLAM model; and process the range sensor 3D model and the correction data to develop a refined 3D model of the environment.

The method can take advantage of the map optimisation capabilities of a visual SLAM system, e.g. loop-closure / bundle adjustment, and a known geometrical relationship between sensors to propagate 3D map optimisations. The method produces a locally and globally optimal combined optoacoustic map. Map building and optimisations take place online in real-time while the system/ROV/AUV is on site performing a survey, allowing for better/faster data gathering, decision-making, analysis, etc.

Developing the refined 3D model may comprise developing a virtual environment. The virtual environment may comprise sizes/distances and/or orientation relative to each other, but without a sense of scale. The virtual environment may be mapped to a world environment, in which sizes/distances and/or orientation are relative/scaled to the real world using: the first image and/or a range data scan. That is, the first image and/or a range data, if it comprises an object of known scale, may be used to determine a scale of the refined 3D model. This can be advantageous in a single camera system.

Optionally, the computing device further comprises a sensor, wherein the sensor has a known spatial relationship with respect of the camera, wherein the data processor is configured to: receive sensor data from the sensor; receive pose data from the SLAM module that is associated in time with the sensor data; and determine a first set of sensor data comprising a first sequence of sensor data received between the first key frame and the second key frame; and record the first sequence of sensor data based on a first sequence of pose data received between the first key frame and the second key frame.

Optionally, the sensor is a second range sensor distinct from the first range sensor having a different field of view with respect to the first range sensor, wherein the data processor is further configured to accumulate the first sequence of sensor data into a first sensor sub-model based on the first sequence of pose data received between the first key frame and the second key frame.

Optionally, the computing device further comprises a pose module configured to generate auxiliary pose data, wherein the data processor is further configured to: receive auxiliary pose data that is associated in time with the range data; and accumulate the first sequence of range data into the first range sub-model based on a first sequence of auxiliary pose data received between the first key frame and the second key frame.

The computing device can be a subsea computing device, with components

In accordance with a second aspect of the invention, there is provided a vehicle comprising the computing device of the first aspect.

The vehicle may comprise a remotely operable or autonomous mobile platform such as an underwater remotely operable vehicle (ROV), an autonomous underwater vehicle (AUV), an unmanned air vehicle (UAV), an unmanned ground vehicle (UGV), an unmanned underwater vehicle (UUV), or an unmanned surface vehicle (USV).

Optionally, the computing device further comprises a pose module configured to generate auxiliary pose data. Optionally, the data processor is further configured to: receive auxiliary pose data that is associated in time with the range data; and accumulate the first sequence of range data into the first range sub-model based on a first sequence of auxiliary pose data received between the first key frame and the second key frame.

Optionally, the first sequence of auxiliary pose data is determined by interpolating the auxiliary pose data. The first sequence of auxiliary pose data may have time stamps which match time stamps of the first sequence of range data.

In accordance with a third aspect of the invention, there is provided a computer implemented method for generating a 3D model of an environment, the method comprising:
receiving images from a camera;
processing the images to develop a SLAM 3D model of the environment;
estimating pose data for the camera;
identifying key frames of the images from the camera;
receiving range data from a range sensor having a known spatial relationship with respect of the camera;
determining a first sequence of pose data from the estimated pose data, wherein the pose data is associated in time with the range data;
determining a first set of range data comprising the first sequence of range data received between a first key frame and a second key frame; and
accumulating the first sequence of range data into a first range sub-model based on the first sequence of pose data received between the first key frame and the second key frame.

Optionally, the method of the third aspect further comprises linking the first range sub-model to the first key frame or the second key frame.

Optionally, the method of the third aspect further comprises: determining a second sequence of pose data from the estimated pose data; determining a second set of range data comprising the second sequence of range data received between the second key frame and a third key frame; and, accumulating the second sequence of range data into a second range sub-model based on the second sequence of pose data received between the second key frame and the third key frame.

Optionally, the method of the third aspect further comprises executing a range sensor 3D reconstruction algorithm to generate a range sensor 3D model of the environment using the first range sub-model and the second range sub-model.

### Brief Description of the Drawings

Figure 1 is a diagram of a computing device according to an embodiment of the invention;
Figure 2a is a time-graph showing a representation of images produced at a given rate by a camera of the computing device;
Figure 2b is a time-graph showing a representation of computed key frames shown with an identifier;
Figure 2c is a time-graph showing a representation of range data produced by a range sensor at its operating/configured rate;
Figure 2d is a time-graph showing a representation a computed range sub-models based on the key frames of Figure 2b, shown with an identifier; and
Figure 3 is a diagram of a computer implemented method according to an embodiment of the invention.

### Detailed Description

By way of a non-limiting overview a mapping vehicle, such as an ROV, comprising a computing device receives camera images and acoustic range scans. The camera images are used to determine key frames representative of a substantive change in the orientation/location of the mapping vehicle. The key frames and pose data are used to generate an acoustic range scan sub-model. The acoustic range scan sub-model can be used to efficiently generate an acoustic range scan map of the environment. In addition, the key frames and pose data may be used to generate a visual SLAM map. Since the visual SLAM map and acoustic range scan map are based on corresponding data (i.e., the key frames and pose data), the two maps can be combined such that: a single map of the environment can be efficiently generated with visual and acoustic data represented; and/or, the advantage of the map optimisation capabilities of the visual SLAM system (e.g. loop-closure / bundle adjustment) can be efficiently applied to the acoustic range scan map. The result is a locally and globally optimal combined optoacoustic map which may be implemented in real-time, and provides better/faster data gathering, decision-making, analysis, etc.

In harsh environments, such as subsea, computing resources are often constrained due to protective casings, for example, computing space and temperature dissipation may be restricted. In addition, communications between the computing device on a vehicle and a larger network may also be restricted in speed or throughput. Embodiments of the invention provide efficiency increases enabling a computing device to better operate in harsh environment scenarios.

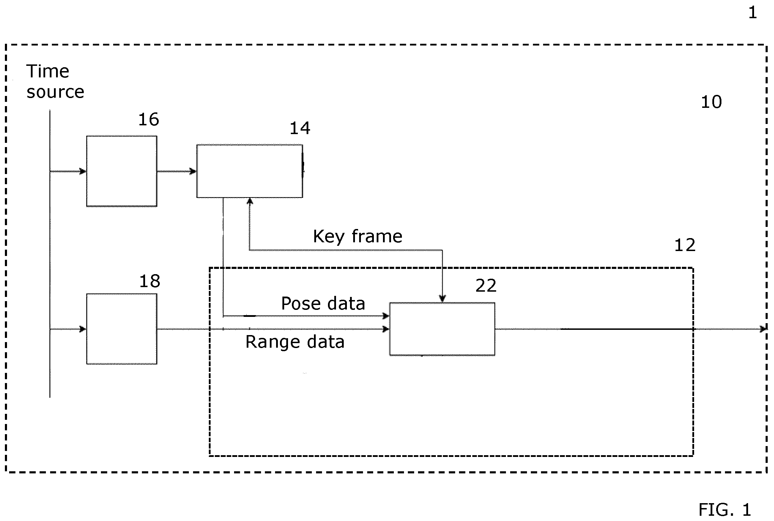

Referring to Figure 1, a computing device for video object detection according to an embodiment of the invention is shown generally at 10. The computing device 10 can be arranged to form part of a vehicle mounted camera system 1 or other platform to perform 3D mapping. The computing device 10 may be arranged for deployment into harsh environments, such as continuous use underwater beyond two meters, subsea, or in the vacuum of space, on a platform, or the like. The platform can comprise a remotely operable or autonomous mobile platform such as an underwater remotely operable vehicle (ROV), an autonomous underwater vehicle (AUV), an unmanned air vehicle (UAV), an unmanned ground vehicle (UGV), an unmanned underwater vehicle (UUV), or an unmanned surface vehicle (USV). When applied to a vehicle such as an autonomous or unmanned system, the computing device can be used for simultaneous localization and mapping (SLAM). The underwater vehicle may carry a sensor suite onboard. The rigidly attached sensors comprise at least a camera system and a range sensor, such as a multibeam echosounder (MBES). The vehicle may be tasked with surveying a subsea region or asset.

In one example, a platform to perform 3D mapping can comprise a subsea remotely operable or autonomous vehicle including a propulsion system, a steering system and a command controller arranged to control the propulsion system and the steering system in accordance with command signals provided from a control station which is remote with respect to the vehicle. The propulsion system and steering system of an autonomous system may be based on any output model of the embodiment.

The computing device 10 comprises, a data processor 12, a simultaneous location and mapping (SLAM) module 14, a camera 16, and a range sensor 18. The data processor 12 is configured to process data from the range sensor. The data processor 12 may comprise the SLAM module 14, such that the data processor can run both modules (SLAM and the range data processing) in parallel. Thus, allowing for sensor information (visual and range sensor) to be processed independently, regardless of the sensor operation rates (e.g., the frame rate of the camera 16, and the scan rate of the range sensor 18). Both modules (camera 16 and range sensor 18) may share consistent timestamps or clock signal, this aids in maintaining synchronisation if they operate at different sensor operation rates. This could mean sharing access to a master clock server or sharing their own timing information across modules or sharing access to a time-offset calibrator module. Examples of timekeeping solutions include a Network Time Protocol (NTP) server or a Pulse Per Second (PPS) signal.

In Figure 1, the SLAM module 14 is shown as a distinct data processor separate from the data processor 12.

The SLAM module 14 receives an image from the camera 16. The SLAM module 14 is configured to execute a SLAM 3D reconstruction algorithm to develop a SLAM 3D model. To generate the SLAM 3D model from video or camera images, the SLAM 3D reconstruction algorithm can take key points that for example make up the edges of an object in the image and associates the key points with corresponding key points from other images, such as earlier captured images or images captured concurrently by other cameras. A SLAM model generated from using camera images, or other visual data may be called a visual SLAM (VSLAM) model. The SLAM 3D reconstruction algorithm which generates the SLAM 3D model using camera images, or other visual data may be called a visual SLAM (VSLAM) 3D reconstruction algorithm.

Knowing the camera pose associated with each image, rays can be projected from the camera positions through the key points of each image and points where the rays for a particular point intersect or are best fit in 3D space represent the 3D location of the corresponding points in the SLAM 3D model. The SLAM 3D reconstruction algorithm can be Structure from Motion or any other appropriate technique that generates a SLAM 3D model from video or camera images. The SLAM 3D model can for example comprise a point cloud. The SLAM 3D reconstruction algorithm can either start building the SLAM 3D model from the image, or use the image to augment a SLAM 3D model already being constructed by the SLAM module 14.

While developing the 3D reconstruction on the SLAM module 14, the SLAM 3D reconstruction can, if necessary, be mapped from the virtual environment to a real-world environment via a local reference frame. This may for example be advantageous if the computing device 10 has a single camera and thus lacks depth perception with a known scale. A SLAM 3D reconstruction is a model with its own reference frame and scale which is relative to itself. A local reference frame may have the same reference frame as the environment the computing device 10 is moving through or observing, i.e., 1m in the real environment = 1m in the local reference frame. A local reference frame may also be scaled relative to the real environment, e.g., 1m in the real environment = 0.5m in the local reference frame. Therefore, the computing device 10 may be configured to determine the position of objects within the reference frame it is moving through.

To create an accurate 3D model the SLAM 3D reconstruction algorithm requires multiple input images. Put another way, to model a 3D object/environment, multiple images at different angles around the object/environment help to build up a more reliable SLAM 3D model of the object/environment. If two images are taken sequentially and the camera 16 has a high capture rate then the two images are likely to be very similar and the latter image received will add little information over the previous image. "Key frames" can be defined by the degree of difference between two unique views of an object/environment. The SLAM 3D reconstruction algorithm can be arranged to compare a received image with the preceding image (or an earlier image) to determine the degree of difference. The later image can contain the object/environment from a different view point with respect to the earlier image due to movement of the object/environment and/or camera 16. Once a difference threshold has been exceeded the received image is marked as a key frame. In other embodiments key frames can be identified by a data processor and/or other means such as waiting a fixed time between key frames, e.g. 1 second or selecting every nth frame. Alternatively, an auxiliary pose module can be used to determine the camera position has moved enough to initiate a key frame. The term 'key frame' is well known in the field of SLAM 3D reconstruction algorithms. A key frame based visual SLAM system uses the camera feed to build a 3D map of the underwater environment. The key frame based visual SLAM system may also estimate camera poses and locations at the camera's frame rate. Key frames generated from the SLAM 3D reconstruction algorithm described above may be called VSLAM key frames.

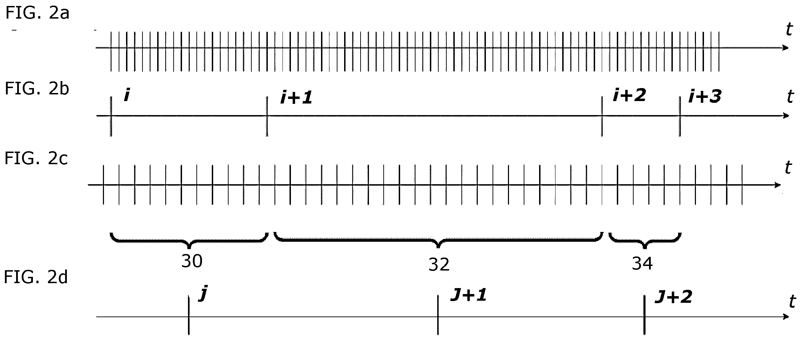

The SLAM 3D reconstruction algorithm typically processes all of the input images (i.e. the camera 16 output dictates the processing power of the SLAM module 14) and chooses key frames to add points that fit well with the model under construction. Points from the key frames can be joined to form a point cloud that can be processed into mesh and rendered as a solid object with computer graphics. Every time a key frame is added, the camera view is typically a unique view of the object/environment. If presented with key frame information, the SLAM 3D reconstruction algorithm does not need to process every frame captured by the camera 16, but rather only key frames. Key frames are likely to arrive at a reduced image capture rate in comparison to the stream of input images (shown in Figures 2a, 2b). The SLAM module 14 can therefore more efficiently process key frames to develop the SLAM 3D model of the environment.

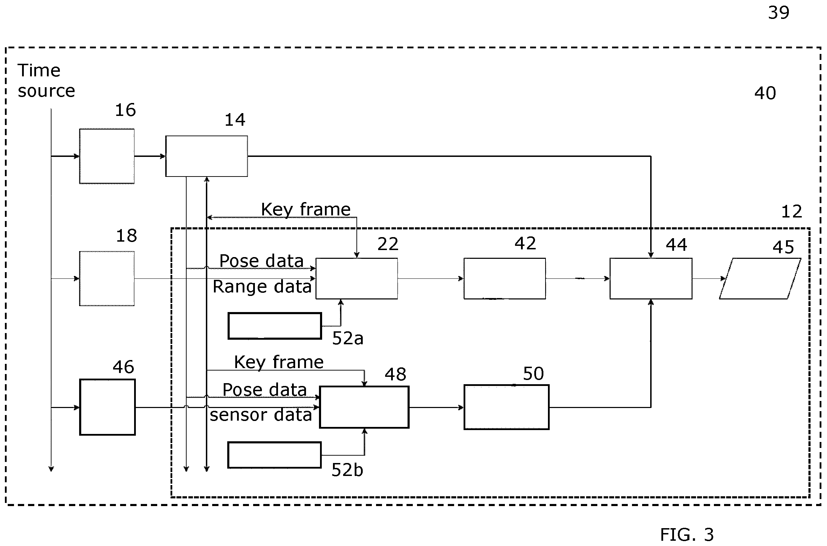

The SLAM module 14 estimates pose data for the camera 16. That is the pose data represents the pose of the camera 16. The pose data may be estimated based on the received images from the camera (i.e., odometry), for example, the pose data may be generated by the SLAM module 14 based on the SLAM 3D reconstruction algorithm. Alternatively, or in addition, a dedicated pose sensor may generate pose data directly, and the pose data for the camera may then be determined. The pose data for the camera may be estimated based in a known spatial relationship between the dedicated pose sensor and the camera. Alternatively, or in addition, another pose sensor may generate pose data, such as inertial navigation sensors (e.g., including GPS, etc.). The another pose sensor and/or dedicated pose sensor may be an auxiliary pose module, as will be described later with Figure 3.

In other embodiments, one or more further cameras can be provided with different fields of view relative to the camera 16, such that additional views can be used to make SLAM 3D reconstructions from multiple cameras.

The data processor 12 receives range data from the range sensor 18. The range sensor has a known spatial arrangement/relationship with respect of the camera 16. For example, this spatial arrangement/relationship may be predetermined or calculated, this will be discussed later. The data processor 12 is configured to run an accumulator process, shown in Figure 1 by an accumulator module 22.

The accumulator module 22 receives a sequence of poses, i.e., pose data from the SLAM module 14 that is associated in time with the range data. The accumulator module 22 also receives a sequence of range data from the range sensor 18. Every time a new key frame is computed by the SLAM module 14, the key frame is provided to the accumulator module 22 of the data processor 12. The reception of a first and second key frame may indicate the start and end of a set of range data, respectively, such that a first set of range data comprises a first sequence of range data received between the first key frame and the subsequent second key frame (which occurs after the first key frame). A first sequence of pose data may be the pose data received between the first key frame and the second key frame. In general, the reception of a key frame defines the start of a set of range data and a set of pose data, and the end of another set of range data and another set of pose data. This is explained further in relation to Figure 2. In an example, the pose data is received by the accumulator module 22 at the frame rate of the camera 16, and the accumulator module 22 determines a pose associated with each received range data. In another example, the pose data is received by the accumulator module 22 at the operating/configured rate of the range sensor 18, such that the accumulator module 22 receives a pose associated with each range data simultaneously.

The range sensor 18 provides one scan of range data at a time, e.g., one swath of depth soundings for a single MBES ping. Knowledge of the pose of the range sensor 18 for a given scan allows multiple scans of range data to be accumulated into a larger 3D point cloud or map of the environment, called a range sub-model. To generate the range sub-model from range data (e.g., acoustic data), each range data may be converted to equivalent 3D coordinates/points. The equivalent 3D coordinates/points of each range data may then be accumulated into a range sub-model.

The accumulator module 22 accumulates the first sequence of range data into a first range sub-model based on a first sequence of pose data received between the first key frame and the second key frame.

In an example, the accumulator module 22 receives input from the range sensor 18 and uses pose data to accumulate consecutive range sensor scans until a key frame is received from the SLAM module 14. Each incoming range sensor scan may be tagged with a timestamp relative to the external time source, the SLAM clock, or relative to the range sensor submodule start up time. The accumulator module 22 then performs a step of accumulation which collates a sequence of range data into a range sub-model, such as a 3D point cloud. Once the key frame is received, the range data accumulated thus far may be tagged with an identifier generated/received with the key frame.

The accumulator module 22 may continue to receive and accumulate new range data until a new key frame is computed and sent to the accumulator module 22. The data processor 12 may determine a second set of range data comprising a second sequence of range data received between the second key frame and a third key frame. The data processor 12 may then accumulate the second sequence of range data into a second range sub-model based on the second sequence of pose data received between the second key frame and the third key frame. In other words, key frames may be used to decide when to stop accumulating a range sub-model and to start a new one. This process may repeat 10, 20, or many more times depending on the size of the environment to be mapped.

Thus, the system design of the computing device 10 according to the first aspect allows efficient use of available resources. For example, by compressing all range data into range sub-models suitable for storage, transmission, or generation of a 3D model.

Figures 2a to 2d shows an illustration of the data synchronisation in the disclosed system with respect to time along the x-axis.

Figure 2a shows a representation of images produced by the camera 16 at a given rate, e.g., 20 Hz. Figure 2b shows a representation of computed key frames shown with an identifier: *i*, *i+1*, *i+2*, etc. Figure 2c shows a representation of range data (e.g., MBES scans) produced by the range sensor 18 at its operating/configured rate, e.g., 6 Hz. The data output rate of the range sensor 18 may be less than the data output rate (i.e., frame rate) of the camera 16. Figure 2d shows a representation of the range sensor accumulation process which uses the key frame (shown in Figure 2b) to tag/group a set of range data (i.e., 30, 32, 34) into range sub-models shown with an identifier: *j*, *j+1*, *j*+*2*, etc. which may correspond to the identifiers associated with key frames (as shown in Figure 2b).

That is, the first range sub-model (e.g., shown in Figure 2d, as range sub-model j) may be provided with an identifier linking it to the first key frame (e.g., shown in Figure 2b, as key frame i) or the second key frame (e.g., shown in Figure 2b, as key frame *i*+*1*). The identifiers may be a time stamp, label, and/or other identifier. Pose data associated with a key frame may share an identifier.

In an example, each key frame is associated with an identifier (ID) and a timestamp indicating the time at which the key frame was computed. The time may be tracked with respect to the start-up time computing device 10 or with respect to a master clock server running independently on the computing device 10 (i.e., a time source).

It can be advantageous to provide each key frame with a timestamp indicating the key frame's creation time. This can reduce the risk of processing the same range data twice: in the preceding set of range data, and in the following set of range data. The timestamp may be used to accurately/precisely determine which is the last range data of a first set of range data 30, and which is the first range data of a second set of range data 32. The first set of range data 30 is accumulated to generate a first range sub-model j and the second set of range data 32 is accumulated to generate a second range sub-model j+1. For example, one way of deciding the exact range data that marks the end of a set of range data is choosing the range data which is closest (in time) to the timestamp associated with the key frame (e.g., within a key frame signal). Providing a timestamp check advantageously compensates for potential time delays between the different system modules (e.g., SLAM module 14, accumulator module 22) and sensors (e.g., camera 16, and range sensor 18) operating at different output rates. For example, a SLAM module 14 could provide camera pose estimates at 20 Hz while the range sensor 18 produces range data at various rates of up to tens of range data per second; thus, timestamps may be validated while tagging/synchronising key frames.

Each range data may be associated with a pose data and a time stamp. A range sub-model may be associated with one of the received pose data received between two key frames, such that the time stamp associated with the one of the received pose data may also be directly associated with the range sub-model. Additionally, or alternatively, a time offset calibration process or a pose interpolation process may be carried out in order to match measurements representing the same point in time and/or to compensate for time delays. A pose interpolation process may comprise (if the received pose data is the pose data of the key frames): (i) determining the pose data of the key frames, and (ii) interpolating (using the timestamps of associated with the received pose data) the received pose data to generate a first sequence of pose data associated with the first set of range data, or the pose data associated with the range sub-model. Alternatively, a pose interpolation process may comprise: (i) determining the two pose data either side of the range sub-model; and (ii) interpolating the two pose data to generate an estimate a pose data and time stamp associated with the range sub-model.

It is also possible to include in a range sub-model additional data provided by the range sensor 18. The additional data may be echo intensities and/or bearings that might be useful for a survey/analysis. The additional data may be tagged in the same manner as the range data in the processes discussed above, using the ID associated with a key frame.

Referring to Figure 3, a computing device according to a further embodiment is shown generally at 40. The computing device 40 can be arranged to form part of a vehicle mounted camera system 39 or other platform to perform 3D mapping. The computing device 40 of Figure 3 is similar to the computing device 10 of Figure 1 and for brevity the following description will focus on the differences and like parts have been given the same reference numerals.

The computing device 40 may further comprise at least one of: a range sensor 3D reconstruction module 42; a refined 3D reconstruction module 44; a sensor 46; a sensor module 48; a sensor 3D reconstruction module 50; and one or more auxiliary pose modules 52a, 52b.

The range sensor 3D reconstruction module 42 is configured to execute a range sensor 3D reconstruction algorithm to generate a range sensor 3D model of the environment using at least the first range sub-model and the second range sub-model. The range sensor 3D reconstruction module 42 receives range sub-models from the accumulator module 22. The range sensor 3D reconstruction module 42 may also receive sensor extrinsics information (i.e., the position and orientation of the range sensor 18 with respect to other sensors (e.g., the camera 16) or a reference frame (e.g., world)) to place the range sub-models relative to a target/common coordinate frame (e.g., "map"), to generate a range sensor 3D model of the environment. The result of this process is the range sensor 3D model of the environment. The range sensor 3D model can for example comprise a point cloud. The range sensor 3D reconstruction algorithm can either start building the range sensor 3D model from the range data, or use the range data to augment a range sensor 3D model already being constructed by the range sensor 3D reconstruction module 42.

A range sub-model may be tagged with the most recent ID associated with a key frame, i.e., there is a 1-to-1 correspondence between a key frame and a range sub-model. This correspondence/synchronisation enables a 3D model of the environment to track and propagate updates or map corrections from the SLAM module 14 to the range sensor 3D model to generate a refined 3D model of the environment. As the SLAM module 14 develops a SLAM 3D model, there may be changes which retroactively or proactively affect the SLAM 3D model. These developments may be used to improve the accuracy of a range sensor 3D model. For example, a change may be a pose correction i.e., realising that an object is at location X and not original location Y, that is, correcting drift that the SLAM module 14 would be able to detect and apply to the range sensor 3D model at the refined 3D reconstruction module 44.

The refined 3D reconstruction module 44 carries out a process of optimisation propagation. Specifically, the refined 3D reconstruction module 44 is configured to execute a 3D refinement algorithm. The 3D refinement algorithm is configured to receive correction data from the SLAM module 14 indicating a development of the SLAM model, and process the range sensor 3D model and the correction data to develop the refined 3D model of the environment. The refined 3D model may be more optimised than the range sensor 3D model such that it provides loop closures, and corrects drift etc. As an example, a bundle adjustment correction would produce changes in the SLAM model that could correct drift that the refined 3D reconstruction module 44 would be able to detect and apply to the range sensor 3D model to generate the refined 3D model.

The correction data comprises information about a change in the SLAM model, such as updates/optimisations of the SLAM model for developing the refined 3D model. Advantageously, applying changes in the SLAM model to the range sensor 3D model in the refined 3D model allows the refined 3D reconstruction module 44 to apply/propagate changes/corrections in the SLAM 3D model to the range sensor 3D model to generate the refined 3D model of the environment. The refined 3D reconstruction module 44 leverages known sensor extrinsics information and the key frame to range sub-model relationship discussed earlier to update a section of the refined 3D model based on a particular range sub-model. Since there is a geometric/spatial relationship between the particular range sub-model and a particular key frame which was used to generate a section of the SLAM 3D model, the refined 3D reconstruction module 44 can propagate changes/corrections in the section of the SLAM 3D model to the section of refined 3D model.

In addition, the refined 3D reconstruction module 44 may be configured to perform a correlation between range data 3D points in a range sub-model and range data 3D points in the refined 3D model when considering SLAM loop closure candidates as part of the 3D refinement algorithm. Advantageously, the correlation between range data 3D points in a range sub-model and range data 3D points in the refined 3D model may be used to enable loop closure candidates to be generated and used to for loop closure when generating the refined 3D model, or to improve confidence in loop closure candidates detected from image features (e.g., from the SLAM module 22). Alternatively or additionally, for the case of an auxiliary pose module to help when turbid conditions prevent visual SLAM from working properly, the refined 3D reconstruction module 44 may be configured to run a correlation algorithm which finds correlations between range data 3D points in a range sub-model and range data 3D points in the refined 3D model. Advantageously, the correlation between range data 3D points in a range sub-model and range data 3D points in the refined 3D model may be used to enable loop closure candidates to be generated and used to for loop closure when generating the SLAM 3D model and/or the refined 3D model.

The refined 3D model of the environment may be a more accurate range sensor 3D model, or a combined 3D map with both visual (from the SLAM module 14) and range sensor (from the accumulator module 22) data represented.

In the disclosed computing device 40, the camera odometry or pose estimates from the SLAM module 14 allow the accumulator module 22 (and the sensor module 48) to position/place range data (and sensor data) for correct/consistent accumulation. A known spatial relationship between camera 16 and range sensor 18 (and sensor 46) enable the accumulation of range data (and sensor data) relative to the camera 16 coordinate frame, and/or with respect to an additional common coordinate frame for all sensors (i.e., camera 16, range sensor 18, sensor 46, etc.), e.g., a "map" frame.

In other embodiments, one or more further sensors (e.g., a further camera and/or range sensor) can be provided with different fields of view relative to the camera 16, and the range sensor 18, such that additional views can be used to make object/environment 3D models. The refined 3D model may use additional sensor data for robustness and/or accuracy in pose estimates and/or scale estimation. The sensor 46 may be any suitable sensor, such as an additional camera, an additional range sensor, a radiation sensor, temperature sensor, etc.

The sensor 46 may be coupled to the data processor 12. The sensor module 48 receives the output from the sensor 46. The output from the sensor 46 is sensor data. The sensor can have a known spatial relationship with respect of the camera 16 (and/or the range sensor 18). The sensor module 48 can receive pose data from the SLAM module that is associated in time with the sensor data. The sensor module 48 can determine a first set of sensor data comprising a first sequence of sensor data received between the first key frame and the second key frame. The processes described above are similar to the process which is performed by the accumulator module 22 without the step of accumulation. Since the sensor module 48 may receive sensor data representing one of a variety of additional sensors, some examples are suitable for the accumulation step described above in relation to the accumulator module 22, such as a range sensor, a camera. In some examples, the accumulation step is not suitable, such as a temperature sensor, a radiation sensor. If the sensor 46 is a sensor not suitable for the accumulation step, then the sensor module 48 may record the first sequence of sensor data based on a first sequence of pose data received between the first key frame and the second key frame. The recorded sensor data may be applied directly to the refined 3D model.

In an example, the sensor 46 is a second range sensor distinct from the range sensor 18 having a different field of view with respect to the range sensor 18. The sensor module 48 may be further configured to accumulate a sequence of sensor data into a sensor sub-model based on the first sequence of pose data received between the first key frame and the second key frame.

Where pertinent, depending on the sensor 46, the data processor 12 may also comprise a sensor 3D reconstruction module 50. The sensor 3D reconstruction module 50 is configured to execute a sensor 3D reconstruction algorithm to generate a sensor 3D model of the environment. The sensor 3D reconstruction module 50 receives a sequence of sensor data or a sensor sub-model from the sensor module 48. The sensor 3D reconstruction module 50 may also receive sensor extrinsics information (i.e., the position and orientation of the sensor 46) to place the sequence of sensor data or a sensor sub-model relative to a target/common coordinate frame (e.g., "map"), to generate a sensor 3D model of the environment. The result of this process is the sensor 3D model of the environment. The sensor 3D model of the environment may be applied to the refined 3D model.

The computing device may also comprise auxiliary pose module 52a, 52b (e.g., an IMU) in the absence of, or in addition to, pose derived from the SLAM module 14. The_auxiliary pose module 52a, 52b may be a single module or multiple modules. The auxiliary pose module 52a, 52b is configured to generate auxiliary pose data that is associated in time with the range data and/or images. The accumulator module 22 and/or the sensor module 48 may receive the auxiliary pose data from the auxiliary pose module 52a, 52b for accumulating/tagging or mapping these additional data. For example, the accumulator module 22 may be configured to accumulate the first sequence of range data into the first range sub-model based on a first sequence of auxiliary pose data received between the first key frame and the second key frame.

The auxiliary pose module 52a, 52b may be used if the SLAM module 14 loses tracking or localisation during operation (e.g., operation of a survey), which, among other things, means that no positional information is available to accumulate range data into a range sub-model accurately. One alternative for that scenario is to discard range data until SLAM localisation is recovered. Once tracking is resumed, the SLAM module 14 may continue to provide pose data and key frames that would allow the accumulator module 22 to keep working as described above.

The auxiliary pose module 52a, 52b may be at least one of: a DVL (Doppler Velocity Log) sensor, an INS (Inertial Navigation System), an AHRS (Altitude and Heading Reference System), and/or any pose module which produce navigational/pose information required for range sensor accumulation and mapping/model production to continue. A process of multi-sensor extrinsic calibration can provide the necessary information to accumulate/place range data in the appropriate locations, e.g., with respect to a "map" frame or other suitable coordinate frame. If/when SLAM tracking is recovered, the system can return to normal operating conditions described earlier. The combination of the SLAM module 14 and the data processor 12 can be one distinct computer or processing core/unit, such that processing can be executed using threads, or can be distinct computers or processing cores/units on the same computer, such that processing can be executed in parallel, i.e., processed simultaneously. The data processor 12 and/or SLAM module 14 can each be coupled to other devices such as network interfaces (not shown) and volatile and non-volatile memory (not shown). The memory can store images, video, or metadata, as well as the algorithms. The data processor 12 and/or SLAM module 14 can be suitable for computationally complex image processing and computer vision algorithms. For example, the data processor 12 and/or SLAM module 14 can comprise one or more processing cores including (but not requiring) GPU cores and embedded processing for video codecs or AI operations, such as a NVidia Tegra (TM) system on a chip (SoC).

The range sensor may be an Multi Beam Echo Sounders (MBES) sensor, sonar, lidar, or other non-camera based range sensor.

The accumulator module 22 may further comprise additional processing such as filtering to reduce the effect of noise or outliers.

In an embodiment, the camera, range sensor, and/or optional auxiliary sensors are rigidly attached to a platform, such as a vehicle. In other embodiments, the camera, range sensor, and/or optional auxiliary sensors have independently adjustable connections to the platform, such that their spatial relationships may vary over time. Sensor extrinsics may record these spatial relationships, such that the spatial relationship between any two sensors on the platform can be determined. The geometric/spatial relationship between sensors may be pre-determined and/or may be obtained from a process of multi-sensor extrinsic calibration. In some examples, the camera, range sensor, and/or optional auxiliary sensors may not be coupled at all to the platform, instead they may be independently movable (e.g., a distributed vehicle comprising multiple independently operable vehicles, such as a robot swarm).

When sufficient data is recorded (SLAM model, key frames, range sub-models and sensor extrinsics) the combined map can be computed offline by applying the appropriate transformations based on the 1-to-1 correspondence from SLAM to range data and the known sensor geometric relationship.

In an alternative embodiment, the accumulator module 22 may signal to SLAM module 14 to request that the SLAM module 14 computes a new key frame. Alternatively, the accumulator module 22 may simply invoke a new key frame from the SLAM module 22. The accumulator module 22 may have an upper limit to the number of range data to be accumulated. Therefore, there may be an upper limit to the size of the first sequence of range data. When the upper limit is reached then the accumulator module 22 may receive a new key frame, e.g., the accumulator module 22 may signal/invoke a new key frame from the SLAM module 22. This may be a limitation of the hardware or may be implemented to maintain the quality of the resulting range sub-model.

In an alternative embodiment the SLAM 3D reconstruction algorithm, range sensor 3D reconstruction algorithm, and/or the 3D refinement algorithm may generate a set of 3D points or equivalents, e.g., polar coordinates.

As described above the computing device 40 of Figure 3 is similar to the computing device 10 of Figure 1. Moreover, in further embodiments, any of the features of the embodiment of Figure 3 that are not in the embodiment of Figure 1 can be applied to the embodiment Figure 1 in isolation of other features of the embodiment of Figure 3, unless specified otherwise. For example, in further embodiments, the device can perform loop closure correction (as described with the description of the refined 3D reconstruction module 44) without having the additional sensors (i.e., sensor 46 with associated modules, and/or auxiliary pose modules) of Figure 3.

In any embodiment, some or all of the components of the computing device can be contained within a casing defining a sealed interior space for isolating the components from the subsea or other harsh environment, as described in PCT/EP2019/079847 for example.

Although the invention has been described above with reference to one or more preferred embodiments, it will be appreciated that various changes or modifications can be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

## Claims

1. A computing device for generating a 3D model of an environment, the computing device comprising:
a data processor;
a range sensor;
a camera; and
a simultaneous location and mapping, SLAM, module configured to execute a SLAM 3D reconstruction algorithm to:
receive images from the camera;
process the images to develop a SLAM 3D model of the environment;
estimate pose data for the camera; and
identify key frames of the images from the camera,
wherein the range sensor has a known spatial relationship with respect of the camera, wherein the data processor is configured to:
receive range data from the range sensor;
receive pose data from the SLAM module that is associated in time with the range data;
determine a first set of range data comprising a first sequence of range data received between a first key frame and a second key frame; and
accumulate the first sequence of range data into a first range sub-model based on a first sequence of pose data received between the first key frame and the second key frame.

2. The computing device of claim 1, wherein the first range sub-model is provided with an identifier linking it to the first key frame or the second key frame.

3. The computing device of any of claims 1 and 2, wherein the first sequence of pose data is determined by interpolating the pose data, wherein the first sequence of pose data has time stamps which match time stamps of the first sequence of range data.

4. The computing device of any preceding claim, wherein the received images comprise a first image and a second image received after the first image; and the SLAM module is configured to:
process the second image to determine whether a threshold has been reached relating to a degree of difference between the second image and the image; and
determine that the second image is the first key frame if the threshold has been reached.

5. The computing device of any preceding claim, wherein the data processor is further configured to:
determine a second set of range data comprising a second sequence of range data received between the second key frame and a third key frame; and
accumulate the second sequence of range data into a second range sub-model based on the second sequence of pose data received between the second key frame and the third key frame.

6. The computing device of claim 5, wherein the data processor is further configured to execute a range sensor 3D reconstruction algorithm to generate a range sensor 3D model of the environment using the first range sub-model and the second range sub-model.

7. The computing device of claim 6, wherein the data processor is further configured to execute a 3D refinement algorithm configured to:
receive correction data from the SLAM module indicating a development of the SLAM model;
process the range sensor 3D model and the correction data to develop a refined 3D model of the environment.

8. The computing device of any preceding claim, wherein the computing device further comprises a sensor, wherein the sensor has a known spatial relationship with respect of the camera, wherein the data processor is configured to:
receive sensor data from the sensor;
receive pose data from the SLAM module that is associated in time with the sensor data; and
determine a first set of sensor data comprising a first sequence of sensor data received between the first key frame and the second key frame; and
record the first sequence of sensor data based on a first sequence of pose data received between the first key frame and the second key frame.

9. The computing device of claim 8, wherein the sensor is a second range sensor distinct from the first range sensor having a different field of view with respect to the first range sensor, wherein the data processor is further configured to accumulate the first sequence of sensor data into a first sensor sub-model based on the first sequence of pose data received between the first key frame and the second key frame.

10. The computing device of any preceding claim, wherein the computing device further comprises a pose module configured to generate auxiliary pose data, wherein the data processor is further configured to:
receive auxiliary pose data that is associated in time with the range data;
accumulate the first sequence of range data into the first range sub-model based on a first sequence of auxiliary pose data received between the first key frame and the second key frame.

11. A vehicle comprising the computing device of any preceding claim.

12. A computer implemented method for generating a 3D model of an environment, the method comprising:
receiving images from a camera;
processing the images to develop a SLAM 3D model of the environment;
estimating pose data for the camera;
identifying key frames of the images from the camera;
receiving range data from a range sensor having a known spatial relationship with respect of the camera;
determining a first sequence of pose data from the estimated pose data, wherein the pose data is associated in time with the range data;
determining a first set of range data comprising the first sequence of range data received between a first key frame and a second key frame; and
accumulating the first sequence of range data into a first range sub-model based on the first sequence of pose data received between the first key frame and the second key frame.

13. The computer implemented method of claim 12, further comprising linking the first range sub-model to the first key frame or the second key frame.

14. The computer implemented method of any of claims 12 and 13, further comprising:
determining a second sequence of pose data from the estimated pose data;
determining a second set of range data comprising the second sequence of range data received between the second key frame and a third key frame; and,
accumulating the second sequence of range data into a second range sub-model based on the second sequence of pose data received between the second key frame and the third key frame.

15. The computer implemented method of any of claims 12 to 14, further comprising executing a range sensor 3D reconstruction algorithm to generate a range sensor 3D model of the environment using the first range sub-model and the second range sub-model.
